# EUROPÄISCHE PATENTSCHRIFT

(11) **EP 2 561 232 B1**
(45) Veröffentlichungstag und Bekanntmachung des Hinweises auf die Patenterteilung: **16.12.2015**
(21) Anmeldenummer: 10739628.5
(22) Anmeldetag: 04.08.2010
(51) Int. Cl.: F04D 29/02, F04D 29/22, F04D 29/62, H02K 1/27, H02K 5/128, F04D 13/06

(54) **ELEKTRISCHE KFZ-KÜHLMITTELPUMPE**
ELECTRIC MOTOR-VEHICLE COOLANT PUMP
POMPE ÉLECTRIQUE POUR RÉFRIGÉRANT DE VÉHICULE AUTOMOBILE

(30) Priorität: 19.04.2010 DE 102010015565
(43) Veröffentlichungstag der Anmeldung: 27.02.2013
(73) Patentinhaber: Pierburg Pump Technology GmbH, 41460 Neuss (DE); Kolektor Magnet Technology GmbH, 45145 Essen (DE)
(72) Erfinder: TEUBEL, Jens, 04746 Hartha (DE); RATHKE, Ronald, 04720 Döbeln (DE); FIEDLSCHUSTER, Martin, 09648 Mittweida (DE); WEINERT, Michael, 04703 Leisnig (DE); WEBER, Norbert, 45307 Essen (DE); GIANNICO, Pietro, 45309 Essen (DE); SCHLUSNUS, Friedel, 45138 Essen (DE)
(74) Vertreter: Patentanwälte ter Smitten Eberlein Rütten Partnerschaftsgesellschaft
(86) Internationale Anmeldenummer: PCT/EP2010/061362
(87) Internationale Veröffentlichungsnummer: WO 2011/131251

(56) Entgegenhaltungen:
- EP-A2- 1 158 175
- DE-A1-102008 008 290
- FR-A3- 2 892 472

## Beschreibung

Die Erfindung betrifft eine elektrisch angetriebene Kfz-Kühlmittelpumpe für ein mit einer Verbrennungskraftmaschine angetriebenes Kraftfahrzeug, die aus einem Pumpengehäuse und einem in dem Pumpengehäuse drehbar gelagerten Rotor besteht, Der Rotor wird von einem Pumpenrotor und einem im Wesentlichen topfförmigen Motorrotor gebildet, wobei der Pumpenrotor mehrere Rotorflügel aufweist, die unmittelbar auf einem Topfboden des Motorrotors stehen.

Elektrische Kfz-Kühlmittelpumpen werden beispielsweise für die Ladeluft- und Motorkühlung eingesetzt, um eine bedarfsgerechte Kühlung, insbesondere in der Kaltstartphase, zu realisieren. Dies führt zu Kraftstoffeinsparungen und zu einer entsprechenden Reduzierung der Abgasemissionen.

Eine derartige Kühlmittelpumpe wird beispielsweise in der DE 101 33 936 A1 offenbart. Die hierin offenbarte Kühlmittelpumpe weist einen einstückig ausgebebildeten und drehbar gelagerten Rotor aus einem spritztechnisch verarbeiteten Kunststoff auf. Der Rotor weist einen Pumpenrotor-Abschnitt mit mehreren bogenförmigen Rotorflügeln auf, die axial aus einem Pumpenrotorboden hervortreten. Weiterhin weist der Rotor einen Motorrotor-Abschnitt auf, der ein Teil eines elektrischen Antriebsmotors ist. Der gesamte Rotor besteht aus einem Polyamid- oder Polyphenylensulfid-Kunststoff und einer feinverteilten Permanentmagnet-Beimischung. Eine derartige Kunststoff-Permanentmagnetmaterial-Mischung weist eine reduzierte mechanische Stabilität gegenüber einem reinem Kunststoff auf, so dass bei einer derartigen Konstruktion eines Rotors die Materialstärke der Rotorflügel entsprechend hoch gewählt werden muss, um den mechanischen Beanspruchungen stand zu halten und einen sicheren Betrieb gewährleisten zu können. Dies hat zu Folge, dass der zur Verfügung stehende Flussquerschnitt der Pumpenrotor-Kanäle zwischen den Rotorflügeln relativ klein ist, wodurch der Wirkungsgrad des Rotors beeinträchtigt ist. Ferner kann ein einstückig ausgebildeter Rotor aus verfahrenstechnischen Gründen nur mit axial distal offenen Pumpenrotor-Kanälen durch Spritzguss hergestellt werden. Ein Pumpenrotor mit distal offenen Pumpenrotor-Kanälen weist eine verringerte hydraulische Leistung auf, so dass hierdurch der Wirkungsgrad des Rotors ebenfalls reduziert ist.

Aus DE 10 2008 008 290 A1 ist ein Rotor einer Kühlmittelpumpe bekannt, der aus einem Pumpenrotor, einem separaten topfförmigen Motorrotor besteht, der Permanentmagnete aufweist. Bei dieser bekannten Vorrichtung weist der Pumpenrotor mehrere Rotorflügel auf, der Pumpenrotor und der Motorrotor sind separat voneinander durch Spritzguss hergestellte Kunststoff-Bauteile, wobei der Motorrotor einen permanentmagnetischen Kern aufweist und mindestens zweipolig magnetisiert ist, und wobei der Pumpenrotor nicht ferromagnetisch ist.

Weitere Rotoren für Kühlmittelpumpen sind bekannt aus FR 2 892 472 A3 und EP 1 158 175 A3.

Aufgabe der Erfindung demgegenüber ist es, eine elektrische Kfz-Kühlmittelpumpe mit einem verbesserten Wirkungsgrad zu schaffen.

Diese Aufgabe wird erfindungsgemäß gelöst durch eine elektrisch angetriebene Kfz-Kühlmittelpumpe mit den Merkmalen des Patentanspruches 1.

Der Pumpenrotor und der Motorotor der Kühlmittelpumpe sind separat voneinander durch Spritzguss hergestellte jeweils einstückige Kunststoff-Bauteile, die aus verschiedenen Materialien bestehen. Das bedeutet, dass der Pumpenrotor beispielsweise aus einem mechanisch stabilen Kunststoff-oder Kunststoffgemisch, und der Motorrotor aus einem anderen und an die technischen Anforderungen angepassten Kunststoff oder Kunststoff-Metall-Gemisch besteht. Der Motorotor weist eine homogen verteilte ferromagnetische Substanz auf und ist mindestens zweipolig magnetisiert und bildet auf diese Weise einen permanent erregten Elektromotor-Rotor. Der Pumpenrotor weist einen ringförmigen Deckring auf und weist keine ferromagnetische Substanz auf, ist also nicht ferromagentisch.

Da der Pumpenrotor separat hergestellt wird, kann ein den technischen Anforderungen entsprechender Kunststoff, beispielsweise mit einer hohen mechanischen Stabilität, gewählt werden. Ferner weist der Pumpenrotor keine die mechanische Stabilität schwächende ferromagnetische Substanz auf. Hierdurch kann die Materialstärke der Rotorflügel entsprechend gering gewählt werden, so dass größtmögliche Flussquerschnitte der einzelnen Pumpenrotor-Kanäle gebildet werden. Dies führt zu einem verbesserten Wirkungsgrad des Pumpenrotors. Ferner ist der Pumpenrotor mit einem ringförmigen Deckring auf den distalen Enden der Rotorflügel ausgestattet. Hierdurch sind die Pumpenrotor-Kanäle auch axial distal verschlossen, wodurch der hydraulische Wirkungsgrad gegenüber distal offenen Pumpenrotor-Kanälen erheblich verbessert ist.

Gemäß einer bevorzugten Ausgestaltung weist der Motorrotor eine in der Axialen liegende zylindrische Öffnung auf, die als Lagerbuchse für eine Achse oder als Aufnahme für eine separate Lagerbuchse dient.

Vorzugsweise weist der Motorrotor eine separate zylindrische Lagerbuchse in der zylindrischen Öffnung auf. Somit kann der Motorrotor ohne komplizierte und kostenaufwendige Einlegeverfahren, bei dem eine Lagerbuchse vor dem Spritzgießen in die Spritzgussform eingebracht wird, kostengünstig hergestellt werden.

Vorzugsweise weist der Motorrotor im Topfboden eine oder mehrere axiale Vertiefungen zur Aufnahme der axialen proximalen Rotorflügel-Enden auf. Alternativ oder ergänzend weisen die Rotorflügel axiale Lagerzapfen auf, die in entsprechende Axialöffnungen im Topfboden des Motorrotors sitzen. Dies ermöglicht eine formschlüssige Verbindung des Pumpenrotors mit dem Motorrotor.

Gemäß einer bevorzugten Ausgestaltung weist der Pumpenrotor eine zylindrische Lagerbuchse auf, die einstückig mit dem Pumpenrotor ausgebildet ist. Somit kann der Pumpenrotor ohne komplizierte und kostenaufwendige Einlegeverfahren, bei dem eine Lagerbuchse vor dem Spritzgießen in die Spritzgussform eingebracht wird, kostengünstig hergestellt werden.

Vorzugsweise weist die Nabe des Motorrotors mindestens eine axiale Mitnehmervertiefung auf, die mit einem entsprechenden axialen Mitnehmerzapfen der Nabe des Pumpenrotors korrespondiert. Dies ermöglicht eine nabenseitige formschlüssige Verbindung des Pumpenrotors und des Motorrotors untereinander.

Vorzugsweise sind der Pumpenrotor und der Motorrotor mittels einer Schweißverbindung materialschlüssig miteinander verbunden. Diese kann durch Laserschweißen, Ultraschallschweißen oder andere dem Fachmann bekannte Schweißverfahren hergestellt sein. Es können auch andere dem Fachmann bekannte Verbindungstechniken, wie beispielsweise das Heißverstemmen, angewendet werden, um eine materialschlüssige Verbindung zwischen Pumpenrotor und Motorrotor zu realisieren.

Alternativ sind der Pumpenrotor und der Motorrotor mittels einer Rastverbindung miteinander verbunden. Eine Rastverbindung ermöglicht eine einfache und kostengünstige formschlüssige Verbindung zwischen Pumpenrotor und Motorotor.

Gemäß einer bevorzugten Ausgestaltung besteht der Pumpenrotor aus einem Kohlefaserverstärktem Verbundmaterial, das bevorzugt Teflon oder Graphit aufweist. Verbundmaterialien weisen eine verbesserte mechanische Stabilität gegenüber reinen Kunststoffen oder Kunststoffgemischen auf, so dass hierbei die Materialstärke der Rotorflügel entsprechend gering gewählt werden kann, so das ein größtmögliche Flussquerschnitt der Pumpenrotor-Kanäle realisiert wird.

Gemäß einer bevorzugten Ausgestaltung ist der Topfboden im Wesentlichen trichterförmig ausgebildet, wobei der Trichter sich zum Einlass hin zuspitzt. Die Außenfläche des Topfbodens ist dadurch derart ausgebildet, dass die Pumpenrotor-Kanäle strömungstechnisch günstig verlaufen, so dass das Kühlmittel stetig von axial nach radial umgelenkt wird.

Nachfolgend wird ein Ausführungsbeispiel der Erfindung anhand der Zeichnung näher erläutert.
Figur 1 zeigt eine Schnittdarstellung des Rotors der erfindungsgemäßen Kühlmittelpumpe.
Figur 2 zeigt eine perspektivische Ansicht des Motorrotors der erfindungsgemäßen Kühlmittelpumpe.
Figur 3 zeigt eine perspektivische Ansicht des Pumpenrotors der erfindungsgemäßen Kühlmittelpumpe.

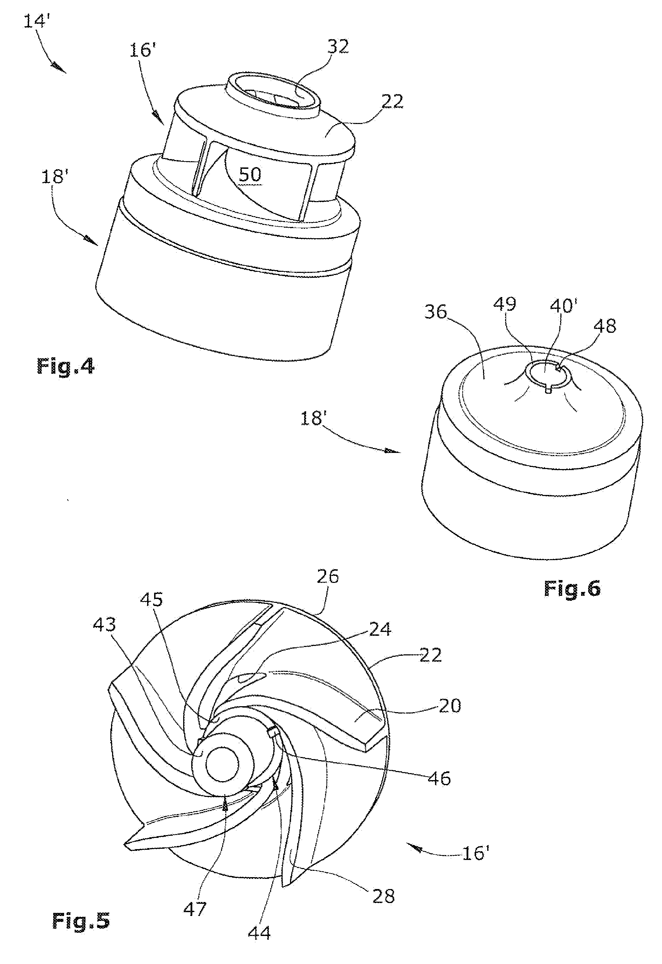

Figur 4 zeigt eine perspektivische Darstellung eines weiteren Ausführungsbeispiels des Rotors der Kühlmittelpumpe.
Figur 5 zeigt eine perspektivische Ansicht des Pumpenrotors aus der Figur 4.
Figur 6 zeigt eine perspektivische Ansicht des Motorrotors aus der Figur 4.
Figur 7 zeigt eine Schnittdarstellung der Kühlmittelpumpe mit dem Rotor aus Figur 1.
Figur 8 zeigt eine Draufsicht der erfindungsgemäßen Kühlmittelpumpe aus der Figur 7, und
Figur 9 zeigt eine Schnittdarstellung der Kühlmittelpumpe mit dem Rotor aus Figur 4.

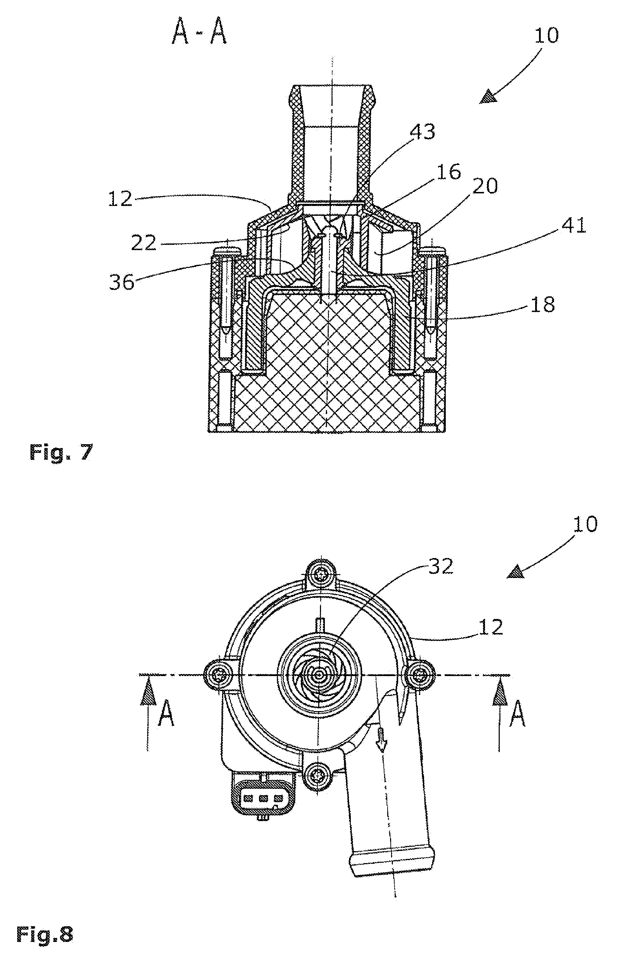

In Figur 7 ist eine elektrische Kfz-Kühlmittelpumpe 10 zur Kühlung einer Kfz-Verbrennungskraftmaschine gezeigt. Die Kühlmittelpumpe 10 besteht aus einem Pumpengehäuse 12 und einem in dem Pumpengehäuse 12 drehbar gelagerten Rotor 14, wobei der Rotor 14 aus einem Pumpenrotor 16 und einem im Wesentlichen topfförmigen Motorrotor 18 gebildet wird.

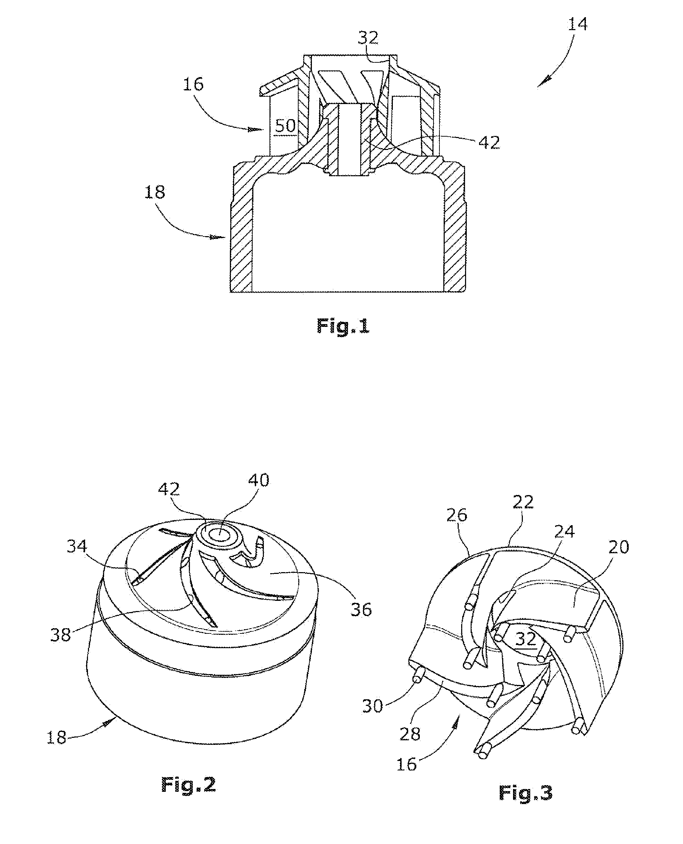

Der Pumpenrotor 16 gemäß Figur 3 wird von mehreren im Wesentlichen bogenförmigen Rotorflügeln 20 und einem auf den distalen Enden der Rotorflügel 20 ringförmigen Deckring 22 gebildet, wobei sich die Rotorflügel 20 von einer inneren Umfangkreislinie 24 des Deckrings 22 radial in Richtung einer äußeren Umfangskreislinie 26 des Deckrings 22 erstrecken. Der Pumpenrotor 16, der einstückig ausgebildet ist, besteht aus einem reinen Kunststoff oder aus kohlefaserverstärktem Verbundmaterial, das bevorzugt Teflon oder Graphit aufweist. Die Rotorflügel 20 weisen an ihren axialen proximalen Rotorflügel-Enden 28 mindestens einen axialen Lagerzapfen 30 auf. Der Pumpenrotor 16 weist eine axiale Einlassöffnung 32 auf, so dass das Kühlmittel von der axialen Einlassöffnung 32 des Pumpenrotors 16 radial nach außen gefördert wird. Die axialen Lagerzapfen 30 der Rotorflügel 20 korrespondieren mit entsprechenden Axialöffnungen 34 im Topfboden 36 des Motorrotors 18, welcher in Figur 2 dargestellt ist.

Der Topfboden 36 des Motorrotors 18 ist im Wesentlichen trichterförmig ausgebildet, wobei sich der Trichter zur Einlassöffnung 32 hin zuspitzt.

Der Motorrotor 18 ist ein durch Spritzguss einstückig hergestelltes Kunststoff-Bauteil, welches eine ferromagnetische Substanz aufweist und mindestens zweipolig in Umfangsrichtung magnetisiert ist. An der zum Pumpenrotor 16 liegenden Außenseite des Topfbodens 36 weist der Motorotor 18 axiale Vertiefungen 38 auf, die mit den axialen proximalen Rotorflügel-Enden 28 korrespondieren. Mittels der Vertiefungen 38 und der Axialöffnungen 34 im Motorrotor 18 und den axialen Lagerzapfen 30 des Pumpenrotors 16 wird eine formschlüssig Verbindung des Pumpenrotors 16 und des Motorotors 18 geschaffen. Der Motorrotor 18 weist im Topfboden 36 eine in der Axialen liegende zylindrische Öffnung 40 auf, die als Lagerbuchse 42 zur Aufnahme einer Achse 41 dient. Alternativ kann in die Öffnung 40 auch eine separate Lagerbuchse 42 eingebaut werden.

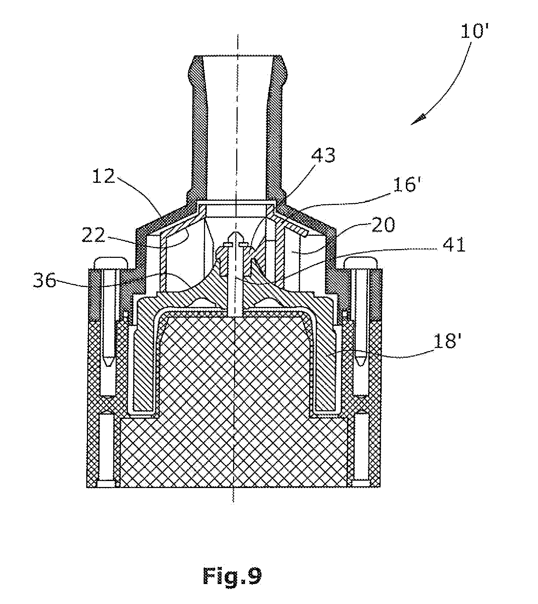

In einem weiteren Ausführungsbeispiel des Rotors 14' der Kühlmittelpumpe 10', dargestellt in Figur 9, weist der Pumpenrotor 16' eine im Zentrum liegende axiale Lagerbuchse 43 zur Aufnahme der Achse 41 auf, wobei die Lagerbuchse 43 einstückig mit dem Pumpenrotor 16' ausgebildet ist. Weiterhin weist der Pumpenrotor 16' eine Nabe 47 auf, wobei die Nabe 47 einen die Lagerbuchse 43 umgebenden Auflagering 44 mit einer Auflagefläche 45 aufweist, der mit mindestens einem axialen Mitnehmerzapfen 46 ausgestattet ist.

Korrespondierend zu dem Mitnehmerzapfen 46 des Pumpenrotors 16' weist die Nabe 49 des Motorrotors 18' der Kühlmittelpumpe 10' eine axiale Mitnehmervertiefung 48 auf.

Beide Kunststoff-Bauteile des Rotors 14, 14', nämlich der Pumpenrotor 16, 16' und der Motorrotor 18, 18' werden separat voneinander als einstückige Bauteile im Spritzguss hergestellt. Dabei wird der Pumpenrotor 16, 16' vorteilhafterweise aus kohlefaserverstärktem Polyphenylensulfid (PPS) und einer weiteren Komponente, wie beispielsweise Teflon oder Grafit, hergestellt und verfügt somit über gute Gleiteigenschaften. Ferner weist die Materialmischung eine hohe mechanische Stabilität auf, so dass die Materialstärke der Rotorflügel 20 relativ gering gewählt werden kann, wodurch der Wirkungsgrad des Pumpenrotors 16, 16' hoch ist. Der Motorotor 18, 18' ist vorteilhafterweise aus Polyphenylensulfid und einer magnetischen Substanz, beispielsweise Hartferrit in Form von Staub, mittels Spritzguss hergestellt. Der Motorrotor 18, 18' ist mindestens zweipolig magnetisiert. Beide Bauteile, nämlich der Pumpenrotor 16, 16' und der Motorrotor 18, 18' werden mittels einer Schweißverbindung oder alternativ mittels einer Rastverbindung miteinander verbunden.

## Patentansprüche

1. Elektrische Kfz-Kühlmittelpumpe (10) zur Kühlung einer Kfz-Verbrennungskraftmaschine, bestehend aus
einem Pumpengehäuse (12), und
einem in dem Pumpengehäuse (12) drehbar gelagerten Rotor (14; 14'), wobei
der Rotor (14; 14') aus einem Pumpenrotor (16; 16') und einem im Wesentlichen topfförmigen Motorrotor (18; 18') gebildet wird, der Pumpenrotor (16; 16') mehrere Rotorflügel (20) aufweist, die unmittelbar auf einem Topfboden (36) des Motorrotors (18; 18') stehen,
der Pumpenrotor (16; 16') und der Motorrotor (18; 18') separat voneinander durch Spritzguss hergestellte einstückige Kunststoff-Bauteile sind, die aus verschiedenen Materialien bestehen,
der Motorrotor (18, 18') eine ferromagnetische Substanz aufweist und mindestens zweipolig magnetisiert ist, und
der Pumpenrotor (16, 16') einen ringförmigen Deckring (22) auf den distalen Enden der Rotorflügel (20) aufweist und nicht ferromagnetisch ist.

2. Elektrische Kfz-Kühlmittelpumpe (10) nach Anspruch 1, wobei der Motorrotor (18; 18') eine in der Axialen liegende zylindrische Öffnung (40; 40') aufweist.

3. Elektrische Kfz-Kühlmittelpumpe (10) nach Anspruch 2, wobei der Motorrotor (18) eine separate zylindrische Lagerbuchse (42) in der zylindrischen Öffnung (40) aufweist.

4. Elektrische Kfz-Kühlmittelpumpe (10) nach einem der vorangegangenen Ansprüche, wobei der Motorrotor (18) im Topfboden (36) axiale Vertiefungen (38) zur Aufnahme der axialen proximalen Rotorflügel-Enden (28) aufweist.

5. Elektrische Kfz-Kühlmittelpumpe (10) nach einem der vorangegangenen Ansprüche, wobei die Rotorflügel (20) axiale Lagerzapfen (30) aufweisen, die in entsprechende Axialöffnungen (34) im Topfboden (36) des Motorrotors (18) sitzen.

6. Elektrische Kfz-Kühlmittelpumpe (10) nach einem der Ansprüche 1 - 2 und 4 - 5, wobei der Pumpenrotor (16') eine zylindrische Lagerbuchse (43) aufweist, die einstückig mit dem Pumpenrotor (16') ausgebildet ist.

7. Elektrische Kfz-Kühlmittelpumpe (10) nach einem der vorangegangenen Ansprüche, wobei die Nabe (49) des Motorrotors (18') mindestens eine axiale Mitnehmervertiefung (48) aufweist, die mit einem entsprechenden axialen Mitnehmerzapfen (46) der Nabe (47) des Pumpenrotors (16') korrespondiert.

8. Elektrische Kfz-Kühlmittelpumpe (10) nach einem der vorangegangenen Ansprüche, wobei der Pumpenrotor (16; 16') und der Motorrotor (18; 18') mittels einer Schweißverbindung materialschlüssig miteinander verbunden sind.

9. Elektrische Kfz-Kühlmittelpumpe (10) nach einem der vorangegangenen Ansprüche, wobei der Pumpenrotor (16; 16') und
der Motorrotor (18; 18') mittels einer Rastverbindung miteinander verbunden sind.

10. Elektrische Kfz-Kühlmittelpumpe (10) nach einem der vorangegangenen Ansprüche, wobei der Pumpenrotor (16; 16') aus einem Kohlefaserverstärktem Verbundmaterial besteht, das bevorzugt Teflon oder Graphit aufweist.

11. Elektrische Kfz-Kühlmittelpumpe (10) nach einem der vorangegangenen Ansprüche, wobei der Topfboden (36) im Wesentlichen trichterförmig ausgebildet ist.

## Claims

1. An electric motor vehicle coolant pump (10) for cooling an internal combustion engine of a motor vehicle, the pump comprising:
a pump housing (12), and
a rotor (14; 14') rotatably supported in the pump housing (12), wherein
the rotor (14; 14') is formed by a pump rotor (16; 16') and a motor rotor (18; 18') configured to be substantially pot-shaped, the pump rotor (16;16') comprising a plurality of rotor blades (20) configured to stand directly on a pot bottom (36) of the motor rotor (18; 18'),
the pump rotor (16;15') and the motor rotor (18; 18') are each integral plastic material parts separately produced by injection molding, which are made from different materials,
the motor rotor (18; 18') comprises a ferromagnetic substance and is magnetized in at least a bipolar manner, and
the pump rotor (16;16') comprises an annular cover ring arranged on distal ends of the rotor blades (20), the pump rotor not being ferromagnetic.

2. The electric motor vehicle coolant pump (10) as recited in claim 1, wherein the motor rotor (18; 18') further comprises a cylindrical opening (40; 40') on an axial line.

3. The electric motor vehicle coolant pump (10) as recited in claim 2, wherein the motor rotor (18) further comprises a separate cylindrical bearing bush (42) in the cylindrical opening (40).

4. The electric motor vehicle coolant pump (10) as recited in one of the preceding claims, wherein the motor rotor (18) comprises axial depressions (38) in the pot bottom (36), the axial depressions being configured to receive axial proximal rotor blade ends (28).

5. The electric motor vehicle coolant pump (10) as recited in one of the preceding claims, wherein the plurality of rotor blades (20) comprises axial bearing pins (30) configured to sit in corresponding axial openings (34) in the pot bottom (36) of the motor rotor (18).

6. The electric motor vehicle coolant pump (10) as recited in one of claims 1-2 and 4-5, wherein the pump rotor (16') further comprises a cylindrical bearing bush (43) formed intagrally with the pump rotor (16').

7. The electric motor vehicle coolant pump (10) as recited in one of the preceding claims, wherein the hub (49) of the motor rotor (18') has at least one axial tappet recess (48) which cooperates with a corresponding axial tappet pin (46) of the hub (47) of the pump rotor (16').

8. The electric motor vehicle coolant pump (10) as recited in one of the preceding claims, wherein the pump rotor (16; 16') and the motor rotor (18; 18') are bonded by a welding connection.

9. The electric motor vehicle coolant pump (10) as recited in one of the preceding claims, wherein the pump rotor (16; 16') and the motor rotor (18; 18') are joined by a latch connection.

10. The electric motor vehicle coolant pump (10) as recited in one of the preceding claims, wherein the pump rotor (16; 16') is made from a carbon fiber reinforced composite material which preferably comprises Teflon or graphite.

11. The electric motor vehicle coolant pump (10) as recited in one of the preceding claims, wherein the pot bottom (36) is substantially funnel-shaped

## Revendications

1. Pompe (10) électrique pour réfrigérant de véhicule automobile pour le refroidissement d'un moteur à combustion interne d'un véhicule automobile, comprenant
un carter de pompe (12), et
un rotor (14; 14') supporté de manière rotative dans ledit carter de pompe (12), dans laquelle
le rotor (14; 14') est formé par un rotor de pompe (16; 16') et un rotor de moteur (18; 18') sensiblement en forme d'un pot, le rotor de pompe (16; 16') comprenant plusieurs pales de rotor (20) reposant directement sur le fond (36) du pot dudit rotor de moteur (18; 18'),
le rotor de pompe (16; 16') et le rotor de moteur (18; 18') sont des éléments formés, séparément l'un de l'autre, d'un seul tenant en matière plastique par moulage par injection, les éléments étant formés de matières différentes,
le rotor de moteur (18; 18') comprend une substance ferromagnétique et est magnétisé au moins de manière bipolaire, et
le rotor de pompe (16; 16') comprend une bague de recouvrement (22) annulaire sur les extrémités distales des pales de rotor (20) et est non-ferromagnétique.

2. Pompe (10) électrique pour réfrigérant de véhicule automobile selon la revendication 1, dans laquelle le rotor de moteur (18) comprend une ouverture (40) cylindrique située dans l'axiale.

3. Pompe (10) électrique pour réfrigérant de véhicule automobile selon la revendication 2, dans laquelle le rotor de moteur (18) comprend un coussinet (42) cylindrique séparé dans l'ouverture (40) cylindrique.

4. Pompe (10) électrique pour réfrigérant de véhicule automobile selon l'une quelconque des revendications précédentes, dans laquelle le rotor de moteur (18) comporte des creux (38) axiaux dans le fond du pot (36) pour recevoir les extrémités (28) axiales proximales des pales de rotor.

5. Pompe (10) électrique pour réfrigérant de véhicule automobile selon l'une quelconque des revendications précédentes, dans laquelle les pales de rotor (20) comprennent des tourillons (30) axiaux reposant dans des ouvertures axiales (34) correspondantes dans le fond (36) de pot du rotor de moteur (18).

6. Pompe (10) électrique pour réfrigérant de véhicule automobile selon l'une quelconque des revendications 1-2 et 4-5, dans laquelle le rotor de pompe (16') comprend un coussinet (43) cylindrique formé d'un seul tenant avec ledit rotor de pompe (16').

7. Pompe (10) électrique pour réfrigérant de véhicule automobile selon l'une quelconque des revendications précédentes, dans laquelle le moyeu (49) dudit du rotor de moteur (18') comprend au moins un creux d'entrainement (48) coopérant avec un tenon d'entraînement (46) axial du moyeu (47) dudit le rotor de pompe (16') correspondant au creux.

8. Pompe (10) électrique pour réfrigérant de véhicule automobile selon l'une quelconque des revendications précédentes, dans laquelle le rotor de pompe (16; 16') et le rotor de moteur (18; 18') sont joints par liaison de matière par une soudure.

9. Pompe (10) électrique pour réfrigérant de véhicule automobile selon l'une quelconque des revendications précédentes, dans laquelle le rotor de pompe (16; 16') et le rotor de moteur (18; 18') sont joints par liaison d'encliquetage.

10. Pompe (10) électrique pour réfrigérant de véhicule automobile selon l'une quelconque des revendications précédentes, dans laquelle le rotor de pompe (16; 16') est fabriqué d'un matériau composite renforcé en fibre de carbone, le matériau comportant de préférence de Teflon ou de graphite.

11. Pompe (10) électrique pour réfrigérant de véhicule automobile selon l'une quelconque des revendications précédentes, dans laquelle le fond dut pot (36) est sensiblement conformé en entonnoir.
